(19) Europäisches Patentamt
European Patent Office
Office européen des brevets

(11) Veröffentlichungsnummer: **0 424 548 A1**

# (12) EUROPÄISCHE PATENTANMELDUNG

(21) Anmeldenummer: **89119588.5**

(22) Anmeldetag: **21.10.89**

(51) Int. Cl.5: **C08J 3/09**, C09D 177/00, H01B 3/30, C08G 18/60

(43) Veröffentlichungstag der Anmeldung: **02.05.91 Patentblatt 91/18**

(84) Benannte Vertragsstaaten: **AT BE CH DE ES FR GB IT LI NL SE**

(71) Anmelder: **BASF Lacke + Farben Aktiengesellschaft**
**Max-Winkelmann-Strasse 80**
**W-4400 Münster(DE)**

(72) Erfinder: **Hoessel, Peter, Dr.**
**Salierstrasse 71**
**W-6707 Schifferstadt(DE)**
Erfinder: **Blum, Rainer**
**Bannwasserstrasse 58**
**W-6700 Ludwigshafen(DE)**
Erfinder: **Boerzel, Paul, Dr.**
**Juethornstrasse 55 a**
**W-2000 Hamburg 70(DE)**
Erfinder: **Lehmann, Helmut**
**Hasenstieg 5**
**W-2057 Rheinbek(DE)**

(74) Vertreter: **Welzel, Gunther, Dr. et al**
**c/o BASF Aktiengesellschaft**
**Carl-Bosch-Strasse 38**
**W-6700 Ludwigshafen(DE)**

## (54) Lagerstabile Schmelzklebelacklösungen.

(57) Lagerstabile Schmelzklebelacklösungen für die Beschichtung von mit Elektroisolierlack beschichteten Drähten, enthaltend im wesentlichen

A) 10 bis 50 Gew.% eines Polyamids in
B) 50 bis 90 Gew.% eines Gemisches aus
B1) 20 bis 99,99 Gew.% eines organischen Lösungsmittels, gegebenenfalls im Gemisch mit Wasser, und
B2) 0,01 bis 80 Gew.% einer organischen $C_1$- bis $C_{12}$-Carbonsäure oder deren Anhydride,
und
C) 0 bis 40 Gew.% eines blockierten Di- oder Polyisocyanates.

EP 0 424 548 A1

## LAGERSTABILE SCHMELZKLEBELACKLÖSUNGEN

Die vorliegende Erfindung betrifft laberstabile Schmelzklebelacklösungen, enthaltend im wesentlichen

A) 10 bis 50 Gew.% eines Polyamids in

B) 50 bis 90 Gew.% eines Gemisches aus

B1) 20 bis 99,99 Gew.% eines organischen Lösungsmittels, gegebenenfalls im Gemisch mit Wasser, und

B2) 0,01 bis 80 Gew.% einer organischen $C_1$- bis $C_{12}$-Carbonsäure, $C_2$-$C_{12}$-Dicarbonsäure oder deren Anhydride

und

C) 0 bis 40 Gew.% eines blockierten Di- oder Polyisocyanates.

Wärmehärtbare Schmelzklebelacke, sogenannte Backlacke, werden speziell für die Herstellung mechanisch und thermisch beanspruchter Wickelkörper aus mit Lack isolierten Drähten verwendet, deren Windungen mit Hilfe von äußerer wärmezufuhr oder durch Stromwärme durch Schmelzen und nachfolgendes Verfestigen einer solchen Backlackschicht miteinander verklebt (verbackt) werden.

Als Backlacke werden häufig Lösungen von Polyamiden bzw. Mischpolyamiden verwendet, was beispielsweise in US 32 60 691, US 39 53 649, US 39 75 571 und DE-A 11 00 849 beschrieben ist.

Bekanntlich sind Polycaprolactam (Polyamid 6) und Polyhexamethylenadipinamid (Polyamid 6,6) bzw. deren Mischpolyamide in stark polaren anorganischen Lösungsmitteln wie wäßriger Calciumchloridlösung, Schwefelsäure, Oleum, Chlorwasserstoffsäure und Salpetersäure löslich. In der Praxis sind solche Lösungen, vor allem zur Drahtlackierung völlig ungeeignet, außerdem findet in Mineralsäuren eine Zersetzung der Polyamide statt.

In der DE-A 28 46 596 wird ein Verfahren zur Herstellung von weichen Copolyamiden beschrieben, die in reinem Caprolactam, in einer Wasser-Caprolactam-Mischung oder in einer WasserAlkohol-Mischung löslich sind. In der DE-A 36 12 372 wird ein härtbarer Klebelack auf Basis eines Polyamids beschrieben, das in N-Methylpyrrolidon hergestellt wird und mit Solventnaphtha, Xylol, Alkohole und Ketone auf die geeignete Viskosität verdünnt wird.

Diese bereits in der Kälte gut löslichen Mischpolyamide zeigen nicht die geforderten thermo-mechanischen Eigenschaften und scheiden deshalb als Werkstoffe für diese Anwendungszwecke aus.

Es zeigte sich, daß spezielle Mischpolyamide auf der Basis von Hexamethylendiammoniumadipat und Caprolactam, z.B. in kresolischen Lösungsmitteln löslich sind. Man erreicht jedoch nur ein sehr ungünstiges Verhältnis von Festgehalt zu Viskosität. Ebenfalls Nachteile ergeben sich beim Lackieren. Aufgrund der niedrigen Konzentration des Lackes ist der Lackauftrag relativ gering, d.h. der Draht muß mehrmals am Auftragssystem vorbei durch den Lackierofen transportiert werden. Hierdurch treten in der Praxis Schwierigkeiten auf, vor allem, wenn man die Grundlackschicht und den Backlack zusammen in einem Lackiervorgang auftragen möchte. Darüber hinaus zeigen die beschriebenen kresolischen Lösungen eine nur ungenügende Lagerstabilität. Vor allem bei höheren Temperaturen, z.B. 45 °C, welche in der Praxis z.B. beim Transport durchaus erreicht werden können, gelieren diese Polyamidlösungen bereits nach kurzer Zeit.

Aufgabe der vorliegenden Erfindung war es, Schmelzklebelacklösungen zur Verfügung zu stellen, die eine möglichst geringe Viskosität bei hohen Feststoffgehalten aufweisen und bei Lagerung über Monate stabil bleiben, ohne zu gelieren und mit der einwandfreie Lackierungen von Drähten mit üblichen Geräten durchführbar sind.

Demgemäß wurden die eingangs definierten Schmelzklebelacklösungen gefunden.

Zu den Aufbaukomponenten ist im einzelnen folgendes auszuführen:

Als Polyamide A) können beliebige Polyamide oder Mischpolyamide, wie sie beispielsweise in der US 32 60 691, US 39 53 649, US 39 75 571 oder der DE-A 28 46 596 beschrieben sind, verwendet werden.

Bevorzugt werden aliphatische Polyamide und Mischpolyamide mit folgenden Struktureinheiten verwendet:

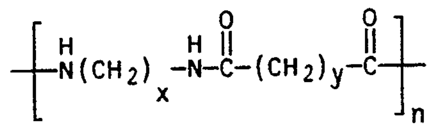

I

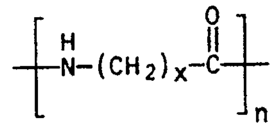

II

$x = 2 - 20$

$y = 2 - 20$

Besonders bevorzugt sind Polycaprolactam (Polyamid 6) und Polyhexamethylenadipinamid (Polyamid 6,6) sowie deren Mischpolyamide.

Diese Polyamide haben ein Molekulargewicht von 4000 bis 50000, bevorzugt 15000 bis 25000. Die Komponente A) wird in Mengen von 10 bis 50 Gew.%, bevorzugt 15 bis 20 Gew.% verwendet, bezogen auf die Schmelzklebelacklösung aus A), B) und C).

Als Komponente B1) wird ein organisches Lösungsmittel oder Lösungsmittelgemisch, gegebenenfalls im Gemisch mit Wasser, verwendet. Als organische Lösungsmittel sind geeignet: aliphatische Alkohole wie $C_1$- bis $C_6$-Alkanole, z.B. Methanol, Ethanol, Propanole, Butanole, Pentanole und Hexanole; aromatische Alkohole wie Benzylalkohol; Phenole wie Phenol, Kresole und Xylenole sowie Gemische dieser Lösungsmittel, gegebenenfalls im Gemisch mit aromatischen Kohlenwasserstoffen wie Toluol und Xylolen und/oder Kohlenwasserstoff-Gemischen mit einem Siedepunkt von 80 bis 250 °C.

Die genannten Lösungsmittel weisen teilweise beträchtliche Unterschiede in ihren Lösungseigenschaften gegenüber Polyamide auf. So ist Polycaprolactam auch ohne Säurezusatz bei 20 °C in Phenolen löslich, jedoch nicht lagerstabil. Die Lösung geliert nach einiger Zeit. In diesem Fall reicht der Zusatz von 0,01 bis 20 Gew.%, bezogen auf die Komponente (9), Säure zur Stabilisierung aus. In aromatischen Alkoholen wie Benzylalkohol ist Polycaprolactam ohne Säurezusatz nur in der Wärme löslich und fällt bei 20 °C wieder aus. Hier liegt die benötigte Säuremenge über 10 Gew.%, bevorzugt über 20 Gew.%, bezogen auf die Komponente (B). In aliphatischen Alkoholen ist Polycaprolactam nur noch in Gegenwart von mehr als 50 Gew.% bevorzugt mehr als 60 Gew.% Säure, bezogen auf Komponente (B) löslich.

In aromatischen Kohlenwasserstoffen sowie Kohlenwasserstoffen mit einem Siedebereich von 80 bis 220 °C allein ist Polycaprolactam auch unter Säurezusatz nicht mehr löslich. Diese Lösungsmittel können einzeln oder im Gemisch mit den oben aufgeführten Lösungsmitteln zugesetzt werden. Wasser kann bis zu 20 Gew.%, bevorzugt bis zu 10 Gew.%, bezogen auf die Komponente (B) mitverwendet werden.

Bevorzugt werden Ethanol, Propanole, Phenol, Kresole oder Xylole oder deren Gemische verwendet. Sie werden in Mengen von 20 bis 99,99 Gew.%, bevorzugt 80 bis 99,9 Gew.%, bezogen auf die Komponente B), verwendet. Besonders bevorzugt ist ein Gemisch aus n-Propanol, Xylolen und Kresolen.

Als geeignete Komponente B2) werden organische Carbonsäuren sowie deren Anhydride verwendet. Geeignete organische Carbonsäuren sind beispielsweise $C_1$- bis $C_{12}$-Monocarbonsäuren wie Ameisensäure, Essigsäure oder Propionsäure oder die Anhydride wie Essigsäureanhydrid oder Propionsäureanhydrid, $C_2$- bis $C_{12}$-Dicarbonsäuren wie Oxalsäure, Malonsäure, Maleinsäure oder Fumarsäure oder Maleinsäureanhydrid oder aromatische Carbonsäuren wie Benzoesäure oder Phenylessigsäure oder deren Anhydride, Hydroxycarbonsäure wie Milchsäure sowie Aminosäuren wie Glycin und Alanin.

Bevorzugte Carbonsäuren sind Ameisensäure, Essigsäure, Oxalsäure und Maleinsäure. Bevorzugte Anhydride sind Essigsäureanhydrid und Maleinsäureanhydrid.

Besonders bevorzugt sind Essigsäure und Maleinsäure. Diese organischen Säuren werden in Mengen von 0,01 bis 80 Gew.% bevorzugt 0,1 bis 20 Gew.%, verwendet.

Als Komponente C) können die Polyamidlösungen noch bis zu 40 Gew.% bevorzugt 5 bis 15 Gew.% blockierte Di- und Polyisocyanate enthalten. Bevorzugt werden Di- und Polyisocyanate verwendet, die mit CH-, NH- oder OH-aciden Verbindungen, wie Ketoximen, Caprolactam, Phenol oder Kresolen blockiert sind. Derartige Verbindungen sind in der DE-A-11 00 849 und der DE-A-16 44 813 beschrieben. Bevorzugtes Blockierungsmittel ist Caprolactam.

Zur Herstellung der erfindungsgemäßen Schmelzklebelacklösungen wird das Polyamid A) in dem Lösungsmittelgemisch B) unter Rühren bei 20 °C bis 180 °C, bevorzugt 30 bis 100 °C, besonders bevorzugt 60 bis 100 °C über einen Zeitraum von bis zu 4 Stunden gelöst und gegebenenfalls mit einem blockierten

Di- oder Polyisocyanat versetzt. Diese Lösungen weisen bei einem Feststoffgehalt von 15 Gew.% Viskositäten von 100 bis 1000 mPas auf, die über mehrere Wochen unverändert bleiben. Den Lösungen können in der Lackindustrie übliche Hilfsmittel wie Kollophonium in Mengen bis zu 1 Gew.% zugesetzt werden.

Die Applikation der erfindungsgemäßen Backlacklösungen erfolgt im allgemeinen auf Drähte aus Kupfer oder Aluminium, die mit einer für die Elektroisolierung üblichen Isolierschicht aus hochtemperaturbeständigen Harzen, wie Polyesterimiden, Polyestern oder Polyamidimiden überzogen sind. Diese isolierten Drähte werden zur Trocknung der einzelnen Backlackschichten bei Einbrenntemperaturen von 200 bis 500 °C, bevorzugt 250 bis 350 °C und Lackiergeschwindigkeiten von 10 bis 30 m/s, bevorzugt 18 bis 22 m/s lackiert.

Auf diese Weise erhält man lagerstabile und wickelfeste Backlackdrähte, welche in Form der entsprechenden Spulenkörper bei 180 bis 210 °C durch Heißluft oder durch Stromwärme verbacken werden.

Die erfindungsgemäßen Lacklösungen mit organischen Carbonsäuren bzw. Anhydriden sind problemlos applizierbar und der fertige Backlack hat hervorragende verwendungstechnische Eigenschaften wie eine hohe Wiedererweichungstemperatur und eine hohe Verbackungsfestigkeit.

Beispiel 1

15 g Polycaprolactam mit einem Molekulargewicht von 15 000 bis 25 000 wurden in einer Lösung, bestehend aus 40 g Kresol (technisches Gemisch), g n-Propanol, 16,66 g Xylol und 8,34 g Eisessig durch Rühren bei Temperaturen von 80 °C aufgelöst. Die Viskosität der Polyamidlösung betrug 510 mPas bei 25 °C und stieg nach 4 Wochen bei 60 °C nur auf 700 mPas an. Bei Temperaturen zwischen -10 und 25 °C fand kein Viskositätsanstieg statt.

Mit diesem Lack wurde ein mit einem handelsüblichen Polyesterimid-Grundlack beschichteter 0,5 mm Kupferdraht auf einer üblichen Drahtlackiermaschine lackiert. Eine verbackene Wickellocke zeigte folgende, nach DIN 46 435 bestimmte Eigenschaften:
Lackierofen-Temperatur: vorne 340 °C; hinten 360 °C;
Verbackungsbedingung: 30 Minuten bei 190 °C;
Wiedererweichungstemperatur: 196 °C.

Beispiel 2

Polycaprolactam aus Beispiel 1 wurde in folgenden Gemischen durch Rühren bei Temperaturen von 80 °C aufgelöst (s. Tabelle 1, Lösung 2a-h). Die Viskositäten der resultieren Backlacklösungen sind in der Tabelle aufgeführt. Alle Lösungen ließen sich problemlos lackieren. Die Drahtlackeigenschaften waren identisch mit den in Beispiel 1 beschriebenen. Alle Backlacklösungen sind lagerstabil. Nach 3 Monaten Lagerzeit bei Temperaturen zwischen -15 und 45 °C wurde keine Neigung zum Gelieren beobachtet.

Tabelle 1

| Viskositäten der Backlacklösungen | | | | | |
|---|---|---|---|---|---|
| Beispiel Nr. | Zusammensetzung der Lösung [1)] in Gew. % | | | | Viskosität (mPas bei 25° C) |
| | Kresol | n-Propanol | Eisessig | Xylol | |
| 2a | 45,47 | 22,74 | 0,13 | 16,66 | 690 |
| 2b | 44,73 | 22,36 | 1,25 | 16,66 | 630 |
| 2c | 43,89 | 21,95 | 2,50 | 16,66 | 590 |
| 2d | 40,00 | 20,00 | 8,34 | 16,66 | 510 |
| 2e | 34,45 | 17,23 | 16,66 | 16,66 | 400 |
| | Kresol | n-Propanol | Essigsäureanhydrid | Xylol | |
| 2f | 45,47 | 22,74 | 0,13 | 16,66 | 640 |
| | Kresol | n-Propanol | Maleinsäure | Xylol | |
| 2g | 40,00 | 20,00 | 8,34 | 16,66 | 270 |
| | Ameisensäure | Benzylalkohol | | | |
| 2h | 63,75 | 21,25 | | | 400 |

[1)] gelöst sind jeweils 15 Gew.% Polycaprolactam

Vergleichsbeispiel

15 g Polycaprolactam des Beispiels 1 wurden in einer Lösung, bestehend aus 45,56 g Kresol (technisches Gemisch) 22,78 g n-Propanol und 16,66 g Xylol gelöst. Die Viskosität der Polyamidlösung betrug 1000 mPas bei 25° C. Bei Temperaturen über 25° C trat nach 3 Wochen Gelieren auf und die Lösung wurde unbrauchbar.

Um auf vergleichbare Viskositäten wie in Beispiel 1 (510 mPas) zu kommen, muß die Probe auf mindestens 12 Gew.% verdünnt werden.

Eine verbackene Wickellocke zeigt im Vergleich zu Beispiel 1 unter gleichen Lackier- und Verbackungsbedingungen identische Werte für die Wiedererweichungstemperatur.

## Ansprüche

1. Lagerstabile Schmelzklebelacklösungen für die Beschichtung von mit Elektroisolierlack beschichteten Drähten, enthaltend im wesentlichen
A) 10 bis 50 Gew.% eines Polyamids in
B) 50 bis 90 Gew.% eines Gemisches aus
B1) 20 bis 99,99 Gew.% eines organischen Lösungsmittels, gegebenenfalls im Gemisch mit Wasser, und
B2) 0,01 bis 80 Gew.% einer organischen $C_1$- bis $C_{12}$-Carbonsäure, $C_2C_{12}$-Dicarbonsäure oder deren Anhydride
und
C) 0 bis 40 Gew.% eines blockierten Di- oder Polyisocyanates

2. Schmelzklebelacklösungen nach Anspruch 1, enthaltend als Komponente B1) aromatische oder aliphatische Alkohole, Phenole oder deren Gemische, gegebenenfalls im Gemisch mit Kohlenwasserstoffen mit einem Siedebereich von 80 bis 220 °C und/oder aromatischen Kohlenwasserstoffen und/oder Wasser.

3. Schmelzklebelacklösungen nach einem der Ansprüche 1 oder 2, enthaltend als Komponente B1) Phenol, Kresole oder Xylenole, aliphatische $C_1$-$C_6$-Alkanole, Benzylalkohol oder deren Gemische, gegebenenfalls im Gemisch mit Kohlenwasserstoffen mit einem Siedebereich von 80 bis 220 °C und/oder aromatischen Kohlenwasserstoffen und/oder Wasser.

4. Schmelzklebelacklösungen nach Anspruch 1, enthaltend als Komponente B1) Phenol.

5. Schmelzklebelacklösungen nach einem der Ansprüche 1 bis 4, enthaltend als Komponente B2) Ameisensäure, Oxalsäure, Essigsäure, Essigsäureanhydrid, Maleinsäure, Maleinsäureanhydrid oder deren Gemische.

6. Schmelzklebelacklösungen nach Anspruch 1, enthaltend Essigsäure oder Maleinsäure als Komponente B2).

7. Schmelzklebelacklösungen nach einem der Ansprüche 1 bis 6, enthaltend als Komponente A) Polyamide mit den Struktureinheiten I oder II:

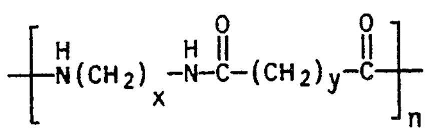

I

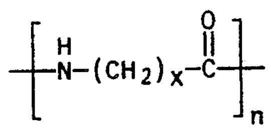

II

in denen x und y Werte von 2 bis 20 bedeuten.

8. Schmelzklebelacklösungen nach Anspruch 7, enthaltend Mischpolyamide aus den Struktureinheiten I und II als Komponente A).

9. Verfahren zur Herstellung lagerstabiler Schmelzklebelacklösungen für die Beschichtung von mit Elektroisolierlack beschichteten Drähten, dadurch gekennzeichnet, daß man
A) 10 bis 50 Gew.% eines Polyamids in
B) 50 bis 90 Gew.% eines Gemisches aus
B1) 20 bis 99,99 Gew.% eines organischen Lösungsmittels, gegebenenfalls im Gemisch mit Wasser, und
B2) 0,01 bis 80 Gew.% einer organischen $C_1$- bis $C_{12}$-Carbonsäure, $C_2$-$C_{12}$-Dicarbonsäure oder deren Anhydride
bei Temperaturen von 20 bis 180 °C unter Rühren löst und mit
C) 0 bis 40 Gew.% eines blockierten Di- oder Polyisocyanates versetzt.

10. Mit einem Schmelzklebelack beschichteter Draht, erhältlich unter Verwendung einer Schmelzklebelacklösung gemäß einem der Ansprüche 1 bis 8.

Patentansprüche für den Vertragsstaat:ES

1. Verfahren zur Herstellung lagerstabiler Schmelzklebelacklösungen für die Beschichtung von mit Elektroisolierlack beschichteten Drähten, dadurch gekennzeichnet, daß man
A) 10 bis 50 Gew.% eines Polyamids in
B) 50 bis 90 Gew.% eines Gemisches aus

B1) 20 bis 99,99 Gew.% eines organischen Lösungsmittels, gegebenenfalls im Gemisch mit Wasser, und
B2) 0,01 bis 80 Gew.% einer organischen $C_1$- bis $C_{12}$-Carbonsäure, $C_2$-$C_{12}$-Dicarbonsäure oder deren Anhydride
bei Temperaturen von 20 bis 180 °C unter Rühren löst und mit
C) 0 bis 40 Gew.% eines blockierten Di- oder Polyisocyanates versetzt.

2. Verfahren nach Anspruch 1, dadurch gekennzeichnet, daß man als Komponente B1) aromatische oder aliphatische Alkohole, Phenole oder deren Gemische, gegebenenfalls im Gemisch mit Kohlenwasserstoffen mit einem Siedebereich von 80 bis 220 °C und/oder aromatischen Kohlenwasserstoffen und/oder Wasser verwendet.

3. Verfahren nach einem der Ansprüche 1 oder 2, dadurch gekennzeichnet, daß man als Komponente B1) Phenol, Kresole oder Xylenole, aliphatische $C_{1-6}$-Alkanole oder den aromatischen Alkohol Benzylalkohol oder deren Gemische, gegebenenfalls im Gemisch mit Kohlenwasserstoffen mit einem Siedebereich von 80 bis 220 °C und/oder aromatischen Kohlenwasserstoffen und/oder Wasser verwendet.

4. Verfahren nach Anspruch 3, dadurch gekennzeichnet, daß man als Komponente B1) Phenol verwendet.

5. Verfahren nach einem der Ansprüche 1 bis 4, dadurch gekennzeichnet, daß man als organische Carbonsäuren bzw. Carbonsäureanhydride, Ameisensäure, Oxalsäure, Essigsäure, Essigsäureanhydrid, Maleinsäure, Maleinsäureanhydrid oder deren Gemische als Komponente B2) verwendet.

6. Verfahren nach einem der Ansprüche 1 bis 5, dadurch gekennzeichnet, daß man als organische Carbonsäuren Essigsäure oder Maleinsäure als Komponente B2) verwendet.

7. Verfahren nach einem der Ansprüche 1 bis 6, dadurch gekennzeichnet, daß man Polyamide mit folgenden Struktureinheiten I oder II als Komponente A) verwendet:

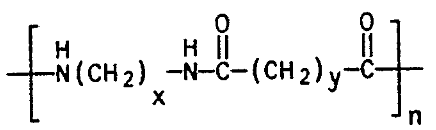 I

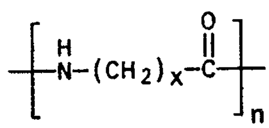 II

in denen x und y Werte von 2 bis 20 bedeuten.

8. Verfahren nach einem der Ansprüche 1 bis 7, dadurch gekennzeichnet, daß man Mischpolyamide mit den Struktureinheiten I und II als Komponente A) verwendet.

9. Mit einem Schmelzklebelack beschichteter Draht, erhältlich unter Verwendung einer Schmelzklebelacklösung gemäß einem der Ansprüche 1 bis 8.

Europäisches Patentamt

# EUROPÄISCHER RECHERCHENBERICHT

Nummer der Anmeldung

EP 89 11 9588

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 241 586 (DAICEL)<br>* Patentansprüche; Seite 2, Zeilen 8-26 *<br>--- | 1-3,5-8 | C 08 J 3/09<br>C 09 D 177/00<br>H 01 B 3/30<br>C 08 G 18/60 |
| X | FR-A-1 552 385 (HENKEL)<br>* Zusammenfassung *<br>--- | 1 | |
| A | DE-A-3 517 753 (Dr. BECK & CO.)<br>--- | | |
| A | DE-A-2 203 521 (VEBA CHEMIE)<br>--- | | |
| A | GB-A-1 455 695 (AIR PRODUCTS AND CHEMICALS)<br>----- | | |

RECHERCHIERTE SACHGEBIETE (Int. Cl.5)

C 08 J
C 09 D
H 01 B
C 08 G

Der vorliegende Recherchenbericht wurde für alle Patentansprüche erstellt

| Recherchenort | Abschlußdatum der Recherche | Prüfer |
|---|---|---|
| DEN HAAG | 13-06-1990 | STIENON P.M.E. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)